# EUROPÄISCHE PATENTSCHRIFT

(11) **EP 0 615 331 B1**
(45) Veröffentlichungstag und Bekanntmachung des Hinweises auf die Patenterteilung: **28.05.1997**
(21) Anmeldenummer: 94102368.1
(22) Anmeldetag: 17.02.1994
(51) Int. Cl.: H02K 7/106, H02P 3/06

(54) **Reihenschlussmotor, insbesondere Universalmotor, mit einer Bremseinrichtung**
A series electric motor particularly in the form of a universal motor with a braking device
Moteur série ou universel muni d'un dispositif de freinage

(30) Priorität: 09.03.1993 DE 4307356
(43) Veröffentlichungstag der Anmeldung: 14.09.1994
(73) Patentinhaber: ROBERT BOSCH GMBH, 70442 Stuttgart (DE)
(72) Erfinder: Schmid, Wolfgang, Dipl.-Ing., D-70794 Filderstadt (DE); Rieker, Werner, Dipl.-Ing., D-71111 Waldenbuch (DE); Stroetgen, Eckerhard, Dr.-Ing., D-71111 Waldenbuch (DE); Kreiter, Csaba, Dipl.-Ing., D-70188 Stuttgart (DE); Seel, Ottmar, Dr.-Ing., D-70771 Leinfelden-Echterdingen (DE)

(56) Entgegenhaltungen:
- EP-A- 0 367 987
- GB-A- 2 241 119

## Beschreibung

### Stand der Technik

Die Erfindung betrifft einen Reihenschlußmotor, insbesondere Universalmotor, mit einer Bremseinrichtung nach dem Oberbegriff des Anspruchs 1.

Reihenschlußmotoren, die auch häufig als Universalmotoren bezeichnet werden, werden eingesetzt bei beispielsweise Elektrohandwerkzeugen wie Heckenscheren, Kettensägen, Rasenmäher, Schleifmaschinen, Kreissägen oder Elektrohobel. Nach Abschalten der Netzspannung weisen diese Maschinen aufgrund der kinetischen Energie ihres Antriebes eine längere Nachlaufzeit auf. Die nachlaufenden Schneidemesser, Scheren, Sägen, Schleifscheiben oder Ketten stellen für den Bediener dieser Geräte eine nicht unerhebliche Verletzungsgefahr dar.

Es ist daher zweckmäßig, beim Abschalten der Netzspannung für ein schnelles Abbremsen des Motors und damit des Werkzeuges zu sorgen.

Es ist bekannt, zum Abbremsen des Motors mechanische Bremsvorrichtungen einzusetzen. Diese sind jedoch wenig geeignet, da sie von der Konstruktion aufwendig, teuer und verschleißanfällig sind.

Weiterhin ist bekannt, eine elektrische Abbremsung eines Universalmotors üblicherweise durch einen selbsterregten Kurzschluß auf der Remanenzinduktion im magnetischen Kreis des Motors zu realisieren. Hierbei ist jedoch nachteilig, daß die von der Remanenzinduktion im Anker induzierte Spannung nicht immer ausreicht, um die Selbsterregung des Universalmotors zuverlässig in Gang zu setzen. Zur Behebung dieses Nachteils ist weiterhin auch bereits vorgeschlagen worden, die Zündung des Bremsvorgangs über einen Kondensator, der über eine Diode während der Betriebszeit aufgeladen wird, durchzuführen. Hierbei ist jedoch nachteilig, daß der Zündvorgang nur einmalig durchgeführt werden kann, so daß, wenn er erfolglos verläuft, eine erneute Zündung nicht mehr möglich ist.

Aus der DE-OS 38 37 943 ist bekannt, die Zündung über einen, auch nach dem Abschalten des Motors mit Wechselspannung beaufschlagten Kondensator durchzuführen. Hier erzeugt der über den Kondensator fließende Strom in der außerhalb des Bremskreises liegenden Feldspule ein elektrisches Feld, das im drehenden Anker eine Spannung induziert, die so groß ist, daß ein sicheres Zünden des Bremsvorgangs erreicht wird.

Neben dem benötigten relativ großen zusätzlichen Einbauplatz des Kondensators ist von Nachteil, daß der Kondensator und damit die eine Feldwicklung bei eingestecktem Gerät die ganze Zeit am Netz hängen. Da zum sicheren Zünden des Bremsvorgangs entsprechend groß dimensionierte Kapazitäten notwendig sind, verursacht der über den Kondensator fließende Strom ein beunruhigendes Brummen.

Aus der GB-A-2 242 119 ist ein Reihenschlußmotor mit einer Bremseinrichtung bekannt, bei dem zum Bremsen eine Kurzschlußeinrichtung für den Anker vorgesehen ist. Zwischen dem Stator und dem Anker des Motors ist wenigstens ein am Stator befestigter Permanentmagnet vorgesehen, der als Bremsmagnet ausgebildet ist. Bei Betätigung der Kurzschlußeinrichtung bewirkt das durch den Permanentmagnet vorgegebene Magnetfeld, daß der Anker abgebremst wird. Die Feldwicklungen sind beim Bremsen stromlos, so daß sie keine Bremswirkung entfalten.

### Vorteile der Erfindung

Der Erfindung liegt daher die Aufgabe zugrunde, einen Reihenschlußmotor der gattungsgemäßen Art zu schaffen, bei dem in einfacher Weise eine sichere Selbsterregung des Motors beim Abschalten vom Netz und damit eine Minimierung des Nachlaufens von Werkzeugen erreicht wird.

Erfindungsgemäß wird die Aufgabe durch die kennzeichnenden Merkmale des Anspruchs 1 gelöst.

Es wurde gefunden, daß hiermit bei einer elektrodynamischen Bremsung nach dem Prinzip der Selbsterregung während des Umschaltens vom Normalbetrieb in den Bremsbetrieb für eine ausreichend lange Zeit die außerhalb des Bremsstromkreises befindliche Feldspule bzw. die weiteren, ein Magnetfeld erzeugenden Mittel kräftig erregt werden können, damit eine große Induktionsspannung im auslaufenden Anker und damit eine sichere Zündung des Bremsvorgangs bewirkt wird.

In vorteilhafter Ausgestaltung der Erfindung ist vorgesehen, in wenigstens einem Pol des Polschuhblechpaketes eine Bohrung oder eine Nut vorzusehen, in der der Permanentmagnet angeordnet werden kann.

Der Permanentmagnet ist dabei so angeordnet, daß sein magnetisches Feld in der gleichen Richtung wie die Feldlinien des elektrisch erregten Hauptflusses wirken und, wenn die Stärke des Magneten vorteilhafterweise so bemessen ist, daß sein Feld mindestens doppelt so hoch wie das Feld infolge der Remanenzinduktion ist, selbst auch in dem Fall, in dem die Remanenzinduktion gegen das Permanentmagnetfeld wirkt, eine zuverlässige Selbsterregung eingeleitet werden kann.

In weiterer vorteilhafter Ausgestaltung der Erfindung ist vorgesehen, daß die Schaltanordnung zum Umschalten vom Motorbetrieb in den Generatorbetrieb ein Zeitglied besitzt, das einen dreipoligen Schalter enthält, wobei wenigstens ein Kontaktsatz des Schalters als Wischkontakt ausgebildet ist, der während des Abschaltvorgangs einer der Feldspulen einen Strom zuführt. Hiermit wird in vorteilhafter Weise erreicht, daß über den Wischkontakt nach Ausschalten des Motors für eine definierte einstellbare Zeit der Erregerstromkreis geschlossen ist und die außerhalb des Bremsstromkreises befindliche Feldspule mit einem kräftigen Wechselstrom erregt wird, der die sichere Zündung des Bremsvorgangs einleitet.

In weiterer vorteilhafter Ausgestaltung der Erfindung ist vorgesehen, daß die Schaltanordnung des Zeitgliedes ein Relais enthält, dem eine Abfallverzögerung zugeordnet ist, die die Kontakte des Relais, die die Feldspulen mit dem Netz verbinden, um eine definierte vorgebbare Zeit versetzt trennt. Hierdurch wird ebenfalls in vorteilhafter Weise eine sichere Selbsterregung des Motors nach der Abschaltung vom Netz erreicht.

Weitere vorteilhafte Ausgestaltungen der Erfindung ergeben sich aus den in den Unteransprüchen aufgeführten Maßnahmen.

### Zeichnung

Die Erfindung wird nachfolgend in Ausführungsbeispielen anhand der zugehörigen Zeichnungen näher erläutert. Es zeigen:
- Figur 1: eine Schaltungsanordnung eines schlußmotors;
- Figur 2a und 2b: im Längs- und Querschnitt ein Polschuh-blech mit angeordneten Permanentmagneten;
- Figur 3a und 3b: einen weiteren Längs- und Querschnitt eines Polschuhbleches mit angeordneten Permanentmagneten;
- Figur 4a und 4b: zwei weitere Ausführungsbeispiele einer Bremsschaltung;
- Figur 5: eine weitere Schaltungsanordnung eines Reihenschlußmotors;
- Figur 6 bis Figur 8: weitere Schaltungsanordnungen eines Reihenschlußmotors und
- Figur 9 bis Figur 11: weitere Schaltungsanordnungen eines Reihenschlußmotors.

### Beschreibung der Ausführungsbeispiele

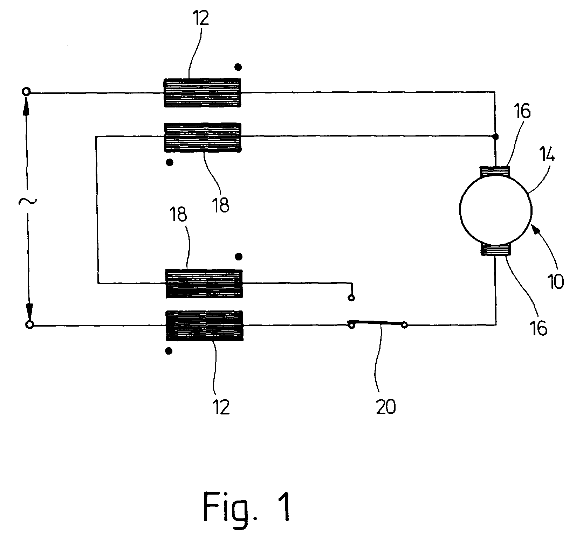

Figur 1 zeigt eine Schaltungsanordnung eines allgemein mit 10 bezeichneten Reihenschlußmotors. Der Reihenschlußmotor 10 weist Feldspulen 12 auf, die in Reihe mit im Anker 14 angeordneten kommutierenden Spulen 16 geschaltet sind.

Weiterhin sind in Reihe geschaltetete Zusatzspulen 18 angeordnet, die einerseits mit einem Schaltkontakt eines Schalters 20 und andererseits mit den kommutierenden Spulen 16 verbunden sind. Der Schalter 20 ist einpolig ausgeführt, wobei der zweite Schaltkontakt mit einer der Feldspulen 12 verbunden ist.

Die Schaltung gemäß Figur 1 zeigt folgende Funktionsweise:

Der Motor 10 befindet sich in der gezeigten Schaltung im Motorbetrieb. Durch Umschalten des Schalters 20 wird der Motor 10 in den Generatorbetrieb und damit Bremsbetrieb geschaltet, indem die kommutierenden Spulen 16 über die Zusatzspulen 18 kurzgeschlossen werden. Die Zusatzspulen 18 weisen dabei im Vergleich zu den Feldspulen 12 einen umgekehrten Wickelsinn auf. Hierdurch ist vorteilhafterweise möglich, den Schalter 20 einpolig auszuführen.

Im Motorbetrieb wird über die Feldspulen 12 ein Betriebsfeld erzeugt, das gemeinsam mit einem sich einstellenden Ankerfeld ein für den Motorbetrieb erforderliches resultierendes Feld ergibt. Durch Umschalten des Schalters 20 wird über die Remanenzinduktion eine Spannung induziert, die zu einem von der Zusatzspule 18 ausgehenden Magnetfeld führt. Diese Felder überlagern sich und bilden ein selbsterregtes Bremsfeld, das selbst bei minimaler Resonanz, die praktisch immer vorhanden ist, sicher einsetzt und zu einer schnellstmöglichen Bremsung des Reihenschlußmotors 10 führt.

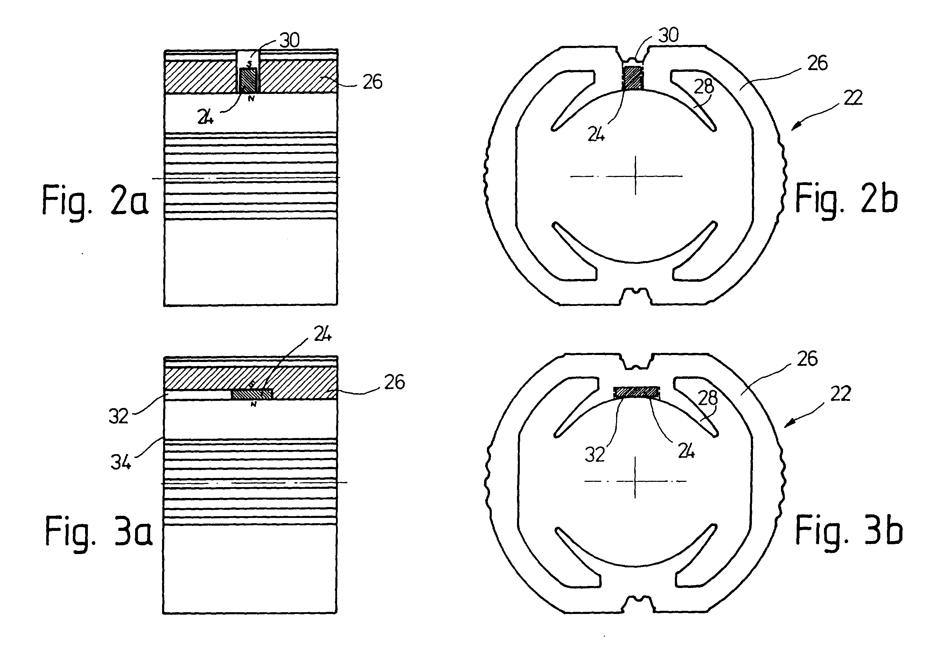

Die Figuren 2a, 2b, 3a und 3b zeigen einen weiteren Reihenschlußmotor 22, bei dem in einer Bohrung 30 oder Nut 32 der Pole 28 ein Permanentmagnet 24 angeordnet ist.

Die Darstellung erfolgt in vereinfachter Form, jeweils im Quer- und Seitenschnitt.

Der Reihenschlußmotor 22 besteht aus einem Polschuhblechpaket 26 mit daran angeformten Polen 28. Auf die Darstellung der Feldspulen und der kommutierenden Spulen wurde aus Gründen der Übersichtlichkeit verzichtet.

Gemäß den Figuren 2a und 2b weist das Polschuhblechpaket 26 eine durchgehende Bohrung 30 auf. In dieser Bohrung 30 ist der Permanentmagnet 24 angeordnet.

Gemäß den Figuren 3a und 3b weist das Polschuhblechpaket 26 eine durchgehende Nut oder Sacknut 32 auf. In dieser Sacknut 32 ist hier der Permanentmagnet 24 angeordnet. Die Sacknut 32 ist in axialer Richtung des Motors 22 so ausgebildet, daß der Permanentmagnet 24 von einer Stirnseite 34 des Motors 22 eingeschoben werden kann, so daß er etwa mittig des Polschuhblechpaketes 26 zu liegen kommt.

Die dargestellte Anordnung des Permanentmagneten 24 übt folgende Funktion aus.

Der Permanentmagnet 24 ist so im oder am Pol 28 des Reihenschlußmotors 22 angebracht, daß sein magnetisches Feld in der gleichen Richtung wie die Feldlinien des elektrisch erregten Hauptflusses wirkt. Die Stärke des Permanentmagneten 24 ist so zu bemessen, daß sein Feld mindestens doppelt so hoch ist wie das Feld infolge der Remanenzinduktion im Eisen des Polschuhblechpaketes 26 ist. Hierdurch wird erreicht, daß auch in dem Fall, daß die Remanenzinduktion im Umschaltzeitpunkt vom Motorbetrieb in den Generatorbetrieb gegen das Feld des Permanentmagneten 24 wirkt, genügend Überschuß des Permanentmagnetfeldes vorhanden ist, um die Selbsterregung zuverlässig einzuleiten.

Bei der in den Figuren 2a und 2b gezeigten beispielsweisen Anordnung des Permanentmagnetes 24 führt der magnetische Rückschluß am Südpol des Permanentmagneten 24 teilweise durch Luft, so daß der in den Figuren 3a und 3b gezeigten Anordnungsmöglichkeit des Permanentmagneten 24 aufgrund der günstigeren magnetischen Feldverteilung der Vorzug zu geben wäre. Zur besseren Ausnutzung des Magnetmaterials des Permanentmagneten 24 werden Kurzschlüsse des Permanentmagnetfeldes durch das umgebende Eisen des Polschuhblechpaketes 26 vermieden, wenn der Permanentmagnet 24 außer an den Polenden durch eine ausreichend dicke Schicht unmagnetischen Materials umgeben ist. Diese aus reichend dicke Schicht unmagnetischen Materials kann entweder Luft oder ein Kunststoff sein.

In vorteilhafter Weise kann der Permanentmagnet 24 mit einer Kunststoffschicht umspritzt werden, die paßgenau zu der Bohrung 30 oder Sacknut 32 ist, so daß die Befestigung des Permanentmagneten 24 in diesen Aussparungen erleichtert wird. Die eigentliche Befestigung am endgültigen Ort kann beispielsweise durch Einkleben oder durch einen geeigneten Formschluß, zum Beispiel einen Schwalbenschwanz erfolgen. Mit der Kunststoffumspritzung des Permanentmagneten 24 können gleichzeitig eventuelle Maßtoleranzen ausgeglichen werden und so der Permanentmagnet 24 leichter und schneller montiert werden.

Insgesamt kann bei bestimmten Einsatzfällen durch die Verwendung eines Permanentmagneten 24 eine kostengünstigere, variablere und platzsparendere Ausführung eines kurzgeschlossenen Reihenschlußmotors bzw. Universalmotors mit Hilfserregung erreicht werden.

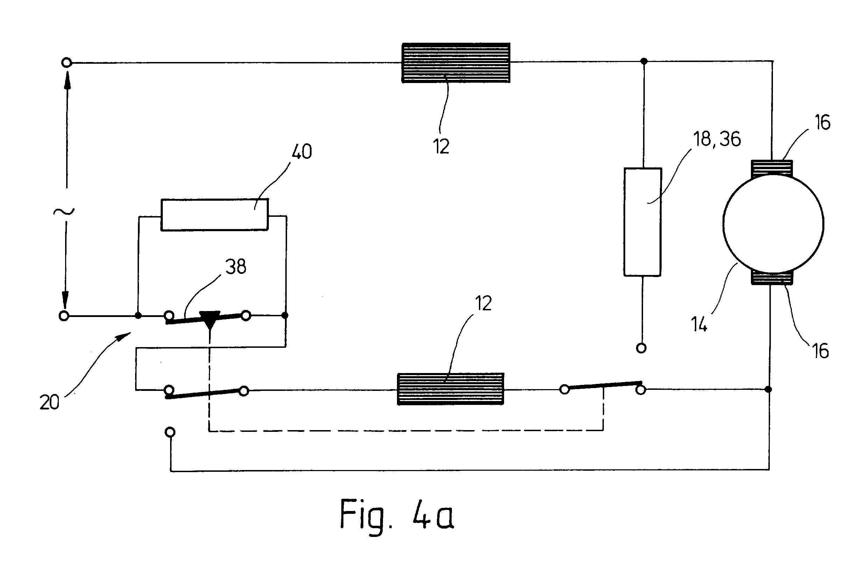

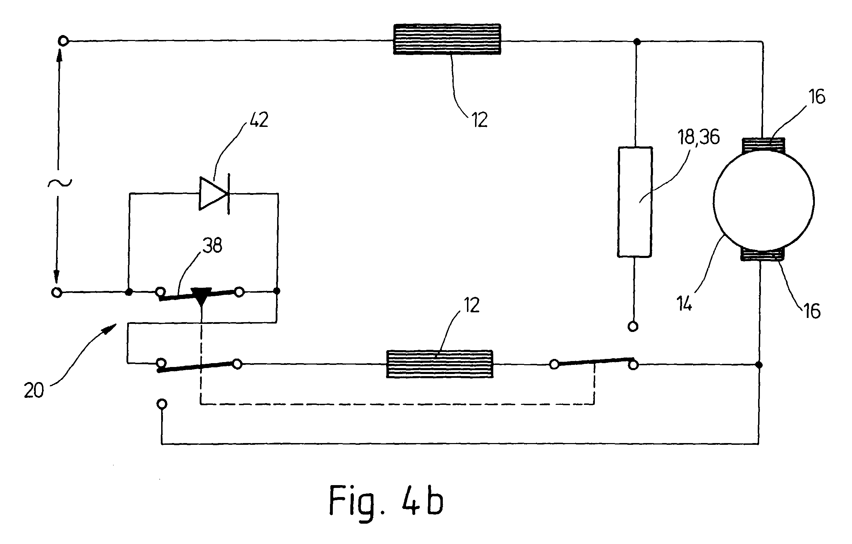

In den Figuren 4 und 4b ist eine Fortbildung eines Permanentmagneteinsatzes gezeigt, wobei hier Bezug auf Figur 1 genommen wird.

Die magnetischen Eigenschaften und Abmessungen des Permanentmagneten 24 müssen so ausgelegt werden, daß die Permanentmagneten 24 nicht durch die elektromagnetischen Felder, die vom Ankerstrom erzeugt werden, entmagnetisiert werden können. Kritisch sind in diesem Zusammenhang der Spitzenwert des sich einstellenden Bremstroms nach dem Kurzschließen der kommutierenden Spulen 16.

Die Stromrichtung liegt durch das initiierende Feld der Permanentmagneten 24 fest und kann nicht beeinflußt werden. Die Höhe des Stroms kann durch den ohmschen Widerstandswert eines Bremswiderstandes 36 oder der Bremserregerwicklungen (Zusatzspulen 18) beeinflußt werden.

Weiterhin ist der Spitzenwert des Motoranlaufstroms beim Einschalten in der Halbwelle kritisch, deren Ankerfeld gegen das Permanentfeld der Permanentmagneten 24 wirkt. Hierzu ist eine Ergänzung der Bremsschaltung nach der Figur 1 gezeigt.

In Figur 4a wird mittels eines zusätzlichen verzögerten Kontaktes 38 im Schalter 20 die Netzspannung nicht sofort in voller Höhe auf den Motor 10 geschaltet, sondern zunächst über einen dem Kontakt 38 parallelgeschalteten Anlaufwiderstand 40. Dieser Anlaufwiderstand 40 begrenzt den Strom im Anker 14 auf einen für den Permanentmagneten 24 unkritischen Wert.

Gemäß Figur 4b wird der Anlaufwiderstand 40 durch eine Diode 42 ersetzt, so daß der Anlaufstrom zunächst nur in einer Richtung fließen kann. Zweckmäßigerweise sind die Stromrichtung der Diode 42 und die Polarität des Permanentmagneten 24 so aufeinander abgestimmt, daß das Ankerfeld des Anlaufstroms die Permanentmagneten 24 nur feldunterstützend beansprucht.

Nachdem der jeweils parallelgeschaltete, verzögerte Schaltkontakt 38 schließt, ist der Anlaufstrom auf einen für die Permanentmagneten 24 unkritischen Wert abgesunken.

In den weiteren Ausführungsbeispielen wird, nachdem die grundsätzlichen Vorzüge der elektrodynamischen Bremsung eines Reihenschlußmotors über eine Zusatzspule 18 oder einen Permanentmagneten 24 erläutert wurden, auf die Auslösung des Bremsvorganges über eine Selbsterregung eingegangen.

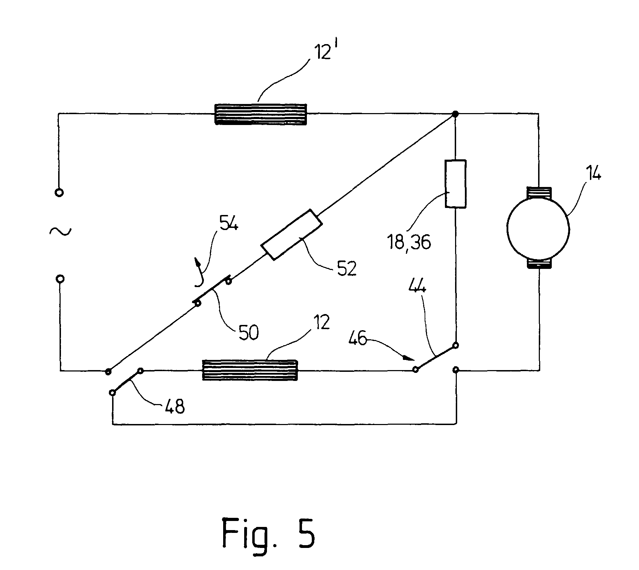

Figur 5 zeigt den grundsätzlichen Aufbau einer Schaltungsanordnung eines Reihenschlußmotors. Die Figur 5 zeigt die Feldspulen 12 und 12', denen ein Anker 14 in Reihe geschaltet ist. Die Feldspulen 12 und 12' sind mit ihren freien Enden mit einem Spannungsversorgungsnetz verbunden. Parallel zu dem Anker 14 ist ein Widerstand (Zusatzspulen 18; Bremswiderstand 36) geschaltet, der über einen Kontaktsatz 44 eines dreipoligen Umschalters 46 mit einem Anschluß der umschaltbaren Feldspule 12 verbunden werden kann. Der zweite Kontaktsatz 48 des Umschalters 46 schaltet das zweite Ende der Feldspule 12 je nach Stellung des Umschalters 46 entweder an das Spannungsversorgungsnetz oder an den Anker 14.

Zwischen dem einen Anschluß des Spannungsversorgungsnetzes und dem nicht freien Ende der Feldspule 12' ist der dritte Kontaktsatz 50 in Reihe mit einem Widerstand 52 geschaltet. Der Kontaktsatz 50 ist dabei als Wischkontakt 54 ausgebildet.

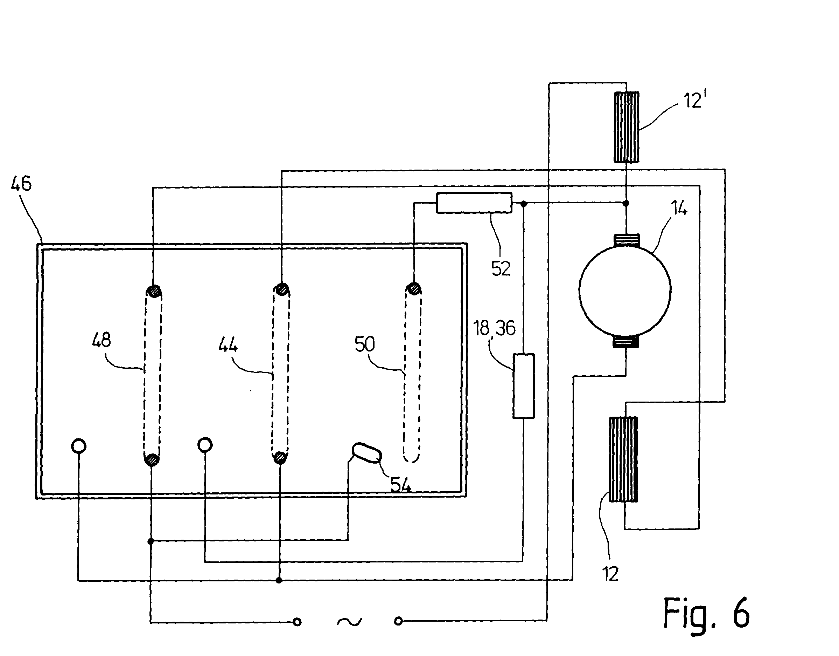

In den Figuren 6, 7 und 8 ist die Schaltungsanordnung nach Figur 5 mit einem zur Verdeutlichung extrem vergrößert dargestellten Umschalter 46 zur besseren Erläuterung in verschiedenen Schaltzuständen nochmals dargestellt. Figur 6 zeigt dabei den Umschalter 46 im eingeschalteten Zustand, also im Motorbetrieb. Hierbei fließt über den geschlossenen Kontaktsatz 48 sowie die Feldspule 12, den ebenfalls geschlossenen Kontaktsatz 44, den Anker 14 und die Feldspule 12' der normale Motorstrom.

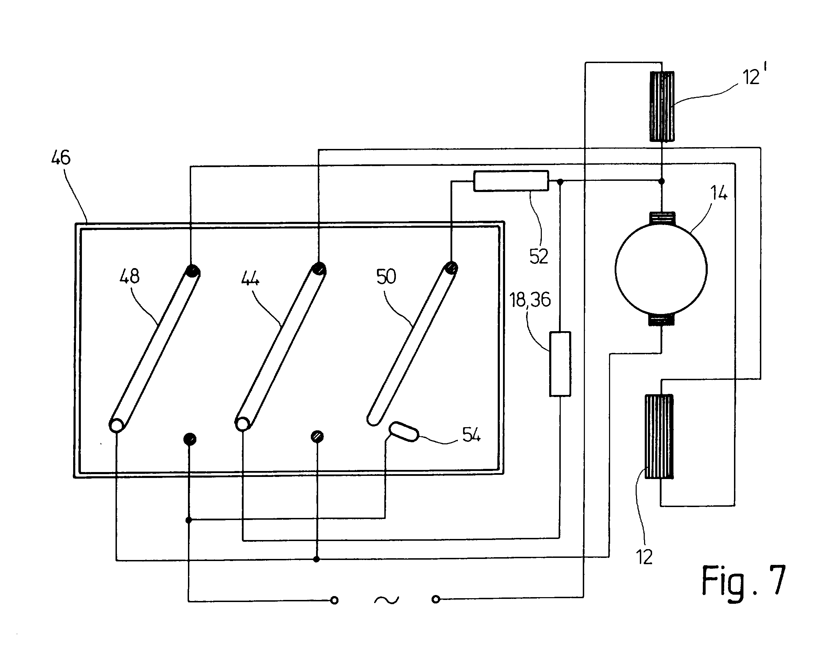

Figur 7 zeigt den Umschalter 46 in der Stellung, in der sich der Reihenschlußmotor im Generatorbetrieb, also in Bremsstellung, befindet. Hierbei ergibt sich durch die Umschaltung des Umschalters 46, daß der Bremsstrom über den Kontaktsatz 48, die Feldspule 12, den Kontaktsatz 44, den Widerstand 52 sowie den Anker 14 fließt. Durch die Umschaltung wird die Feldspule 12, in Reihe zum Widerstand 18; 36 und zum Anker 14 geschaltet. Es erfolgt also eine Umpolung der Feldspule 12.

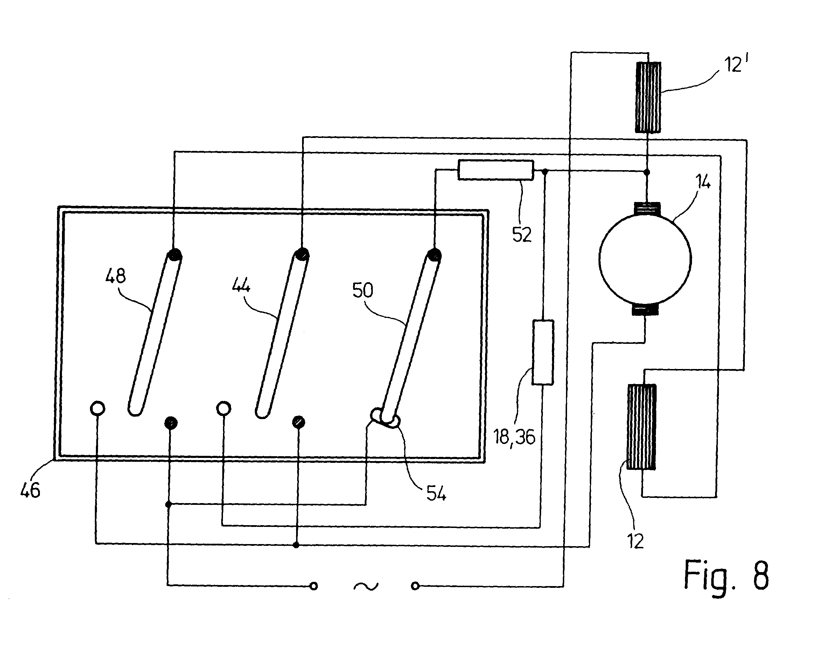

Figur 8 zeigt den Umschalter 46 in einer Initialisierungsstellung, auf deren Bedeutung weiter unten noch eingegangen wird. Hierbei kontaktiert während des Umschaltens des Umschalters 46 der Kontaktsatz 50 für eine bestimmte Zeit einen Wischkontakt 54. Während dieser Kontaktierung, in der sich der Motor nicht mehr im Motorbetrieb und noch nicht im Generatorbetrieb befindet, fließt über den Kontaktsatz 50, den Widerstand 52 und der Feldspule 12' ein Initialisierungsstrom.

Insgesamt übt die Schaltungsanordnung nach den Figuren 5 bis 8 folgende Funktion aus.

Beim Verlassen des Motorbetriebes werden die Kontaktsätze 48 und 44 geöffnet, wobei der Kontaktsatz 50 den Wischkontakt 54 noch nicht kontaktiert hat. Für diese Zeitspanne wird der Motor insgesamt zunächst stromlos. Kurze Zeit später streift der Kontaktsatz 50 über den Wischkontakt 54, infolge dessen über die Feldspule 12' ein Strom fließt. Bei weiterer Annäherung der Kontaktsätze 48 und 44 an die Ausstellung und damit Bremsstellung befindet sich der Kontaktsatz 50 noch in Kontakt mit dem Wischkontakt 54. Hierdurch wird über die Feldspule 12' noch ein kräftiges Magnetfeld erzeugt, das im Anker 14 eine ausreichende Induktionsspannung induziert, so daß eine sichere Zündung des Bremsvorgangs im Generatorbetrieb des Motors erreicht wird. Nachdem der Umschalter 46 seine Endstellung erreicht hat, wird die Verbindung über den Kontaktsatz 50 und den Wischkontakt 54 wieder geöffnet. Die Feldspule 12' wird dadurch stromlos. Inzwischen ist jedoch der über die Feldspule 12 induzierte Bremsstrom so groß geworden, daß ein Aussetzen der Bremsung unmöglich wird.

Insgesamt wird mit der beschriebenen Schaltung erreicht, daß die außerhalb des Bremskreises liegende Feldspule 12' für die Übergangszeit der Umschaltung vom Motorbetrieb in den Generatorbetrieb eine Induktionsspannung aufbaut, die ein sicheres Zünden der Bremsung gewährleistet.

Indem die Länge des Wischkontaktes 54 vorherbestimmt wird, kann die Dauer, in der der Initialisierungsstrom fließen soll, eingestellt werden. Um ein sicheres Zünden der Bremsung zu erreichen, sollte die Dauer so eingestellt werden, daß der Kontaktsatz 50 mit dem Wischkontakt 54 wenigstens für ein ungerades Vielfaches der Dauer einer Halbwelle der Netzspannung in Verbindung bleibt.

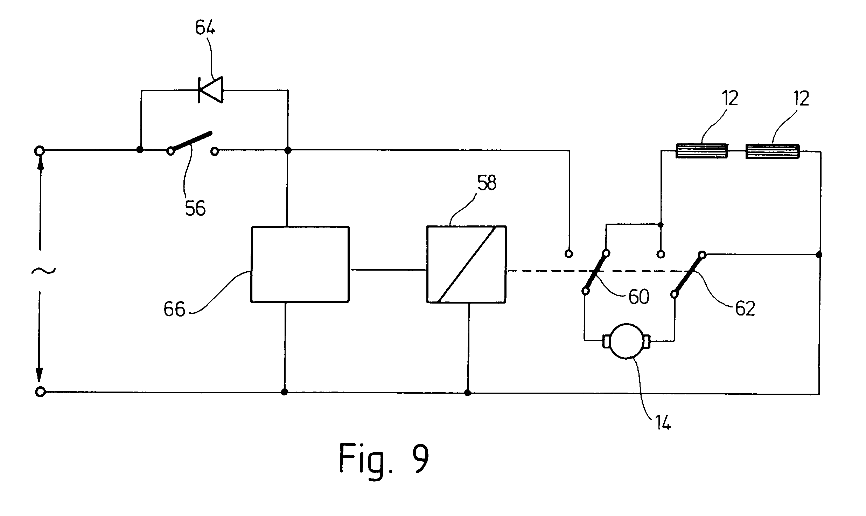

Gemäß den in den Figuren 9 bis 11 dargestellten Ausführungsbeispielen wird die, bereits in den Figuren 5 bis 8 beschriebene, kurzzeitige Induzierung einer Spannung durch die außerhalb des Bremskreises liegende Feldspule weitergebildet. Im Gegensatz zu dem beschriebenen, mechanisch wirkenden Wischkontakt 54 soll nunmehr die selbe Wirkung auf elektronischem Wege erreicht werden.

Die Schaltung nach Figur 9 weist dazu einen Ein/Ausschalter 56 auf, der im geschlossenen Zustand ein Relais 58 schließt. Die dem Relais 58 zugeordneten Kontaktsätze 60 und 62 schalten im geschlossenen Zustand des Schalters 56 den Anker 14 mit den Feldspulen 12 in Reihe. Dem Schalter 56 ist weiterhin eine Gleichrichterdiode 64 parallelgeschaltet. Mit der Parallelschaltung aus Schalter 56 und Gleichrichterdiode 64 liegt ein dem Relais 58 zugeordnetes Abfallverzögerungsglied 66 in Reihe.

Liegt an der Schaltung eine Netzspannung an, und wird der Schalter 56 betätigt, so befindet sich die gesamte Schaltung im Motorbetrieb, indem ein Strom über den Schalter 56 den nunmehr umgeschalteten Kontaktsätzen 60 und 62 des Relais 58 sowie den Anker 14 und den Feldspulen 12 fließt. Soll der Motorbetrieb beendet werden, wird der Schalter 56 geöffnet, aber es bleiben jedoch aufgrund des Abfallverzögerungsgliedes 66 des Relais 58 die Kontaktsätze 60 und 62 zunächst noch in Motorbetriebs-Stellung. Hierdurch wird erreicht, daß über die Gleichrichterdiode 64 sowie die geschlossenen Kontaktsätze 60 und 62 sowie den Anker 14 und die Feldspulen 12 ein pulsierender Gleichstrom fließt.

Dieser pulsierende Gleichstrom fließt solange wie die Abfallzeit des Abfallverzögerungsgliedes 66 eingestellt ist. Hierdurch wird erreicht, daß nach Umschalten des Motors vom Normalbetrieb in den Generatorbetrieb, das heißt Bremsbetrieb, für eine ausreichend lange Zeit, die durch die Abfallzeit des Relais 58 bestimmt wird, der pulsierende Gleichstrom zur Erzeugung einer maximalen Remanenzinduktion durch den Motor fließt.

Hierdurch sind optimale Voraussetzungen für eine Selbsterregung gegeben. Die Abfallverzögerung wird so eingestellt, daß sie mindestens 20 msec beträgt.

Hierdurch wird erreicht, daß mindestens eine Halbwelle der Netzspannung den Motor vormagnetisiert. Ein weiterer Vorteil ergibt sich, indem die Abfallzeit auf ein ungerades Vielfaches der Dauer einer Halbwelle der Netzspannung eingestellt wird, daß alle Kontakte des Bremsstromkreises im Mittel nur halb so oft im stromführenden Zustand geschaltet werden. Hierdurch wird die Lebensdauer der Kontakte wesentlich erhöht.

Nach Abfall des Relais 58 schalten die Kontaktsätze 60 und 62 um, und der Motor ist in Bremsbetrieb geschaltet, indem die Feldspulen 12 nunmehr parallel zum Anker 14 liegen. Durch die erfolgte maximale Vormagnetisierung vor Umschalten in den Bremsbetrieb ist eine sichere Zündung des Bremsvorganges gegeben.

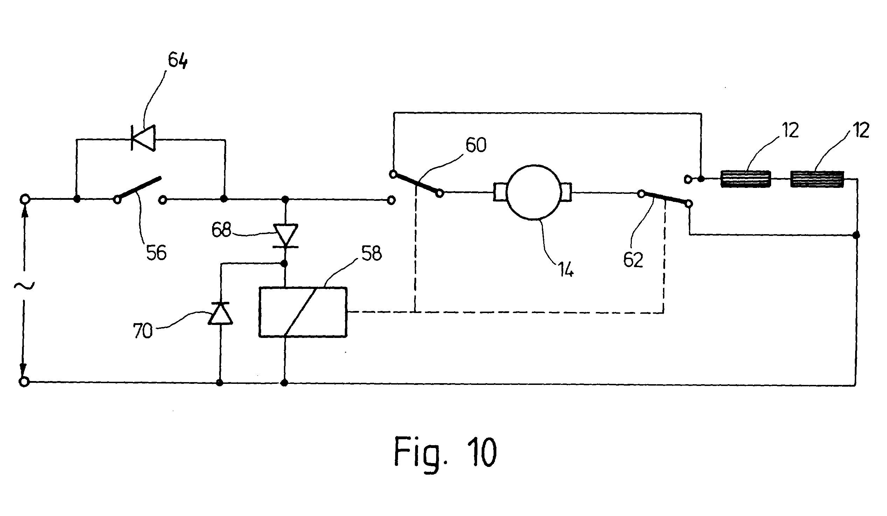

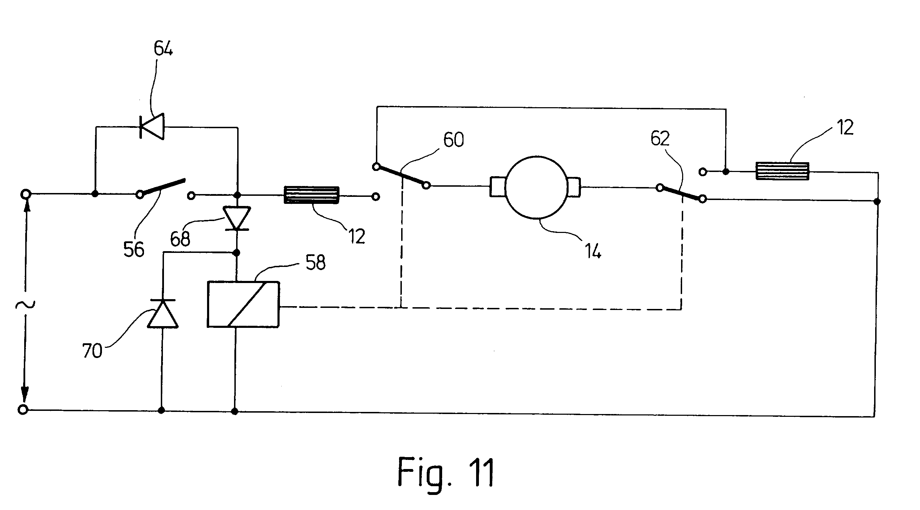

Bei den in den Figuren 10 und 11 gezeigten Schaltungsanordnungen sind gleiche Teile, wie in der Figur 9, mit den gleichen Bezugszeichen versehen.

In Figur 10 ist der Motor asymmetrisch verschaltet, das heißt, bei geschlossenem Schalter 56 und damit über das Relais 58 geschlossenen Kontaktsätzen 60 und 62, liegen der Anker 14 und dann die Feldspulen 12 in Reihe.

Figur 11 zeigt die selbe Schaltungsanordnung für einen symmetrischen Motor, wo der Motorstrom bei geschlossenem Schalter 56 erst über die erste Feldspule 12 und dann über den Anker 14 und die zweite Feldspule 12 fließt. Die Abfallverzögerung wird durch eine mit dem Relais 58 in Reihe geschaltete Diode 68 und eine zum Relais 58 parallelgeschaltetete Freilaufdiode 70 realisiert. Indem der Schalter 56 zur Abschaltung des Motors, und damit Umschaltung in den Generatorbetrieb bzw. Bremsbetrieb, geöffnet wird, fließt über die Gleichrichterdiode 64 ein pulsierender Gleichstrom, der durch die, dem Relais 58 vorgeschaltete Diode 68 gleichgerichtet wird. Durch eine geeignete Dimensionierung der Freilaufdiode 70 und der Relaisspule des Relais 58 können Abfallzeiten von ca. 30 msec erreicht werden.

Hiermit ist gewährleistet, daß mindestens eine Halbwelle der Netzspannung den Motor vormagnetisiert, bevor das Relais 58 abfällt und damit die Kontaktsätze 60 und 62 den Motor in Bremsschaltung verschalten.

Zur Wirkungsweise im einzelnen wird auf die bereits weiter oben dargelegten Zusammenhänge verwiesen.

## Patentansprüche

1. Reihenschlußmotor, insbesondere Universalmotor, mit einer Bremseinrichtung, mit einem, eine Feldwicklung aufweisenden Stator, dessen Polschuhblechpaket neben den Feldspulen (12) weitere, ein Magnetfeld induzierende Mittel (24), vorzugsweise winigstens ein Permanentmagnet zugeordnet sind, mit einem rotierenden, über einen Kommutator und Bürsten gespeisten Anker und mit einer zum Umschalten in den Bremsbetrieb geeigneten Schaltanordnung, **dadurch gekennzeichnet**, daß zum Umschalten in den Bremsbetrieb die Schaltanordnung einen Schalter (20) aufweist, mit dem wenigstens eine Feldwicklung (12) umschaltbar ist, daß diese Feldwicklung (12) mit ihrer magnetischen Erregung die ein Magnetfeld induzierenden Mittel (24) unterstützt, und daß die Schaltanordnung ein Zeitglied aufweist, mit dem in der Übergangszeit vom Motorbetrieb in den Bremsbetrieb eine Induktionsspannung für ein sicheres Zünden der Bremsung vorgebbar ist.

2. Reihenschlußmotor nach Anspruch 1, **dadurch gekennzeichnet**, daß wenigstens ein Pol (28) des Polschuhblechpaketes (26) wenigstens eine Nut aufweist.

3. Reihenschlußmotor nach Anspruch 2, **dadurch gekennzeichnet,** daß die Nut in Richtung der durch die Feldspule (12) erregten Hauptfeldlinien verläuft und in der Nut der Permanentmagnet (24) angeordnet ist.

4. Reihenschlußmotor nach Anspruch 3, **dadurch gekennzeichnet,** daß die Nut als durchgehende Bohrung (30) ausgebildet ist und in der Bohrung (30) der Permanentmagnet (24) angeordnet ist.

5. Reihenschlußmotor nach Anspruch 3, **dadurch gekennzeichnet,** daß die Nut als, in Umfangsrichtung des Pols (28) verlaufende durchgehende Nut oder Sacknut (32) ausgebildet ist und in der durchgehenden Nut oder Sacknut (32) der Permanentmagnet (24) angeordnet ist.

6. Reihenschlußmotor nach Anspruch 5, **dadurch gekennzeichnet,** daß die Sacknut (32) in ihrer axialen Ausdehnung auf die Abmessung des Permanentmagneten (24) begrenzt ist.

7. Reihenschlußmotor nach einem der Ansprüche 3 bis 6, **dadurch gekennzeichnet,** daß der Permanentmagnet (24), außer an seinen Polen, gegen den Pol (28) mit einer unmagnetischen Schicht, vorzugsweise Luft oder Kunststoff, umgeben ist.

8. Reihenschlußmotor nach einem der Ansprüche 3 bis 7, **dadurch gekennzeichnet,** daß der Permanentmagnet (24) in die Bohrung (30) bzw. die Sacknut (32) eingeklebt ist.

9. Reihenschlußmotor nach einem der Ansprüche 5 bis 8, **dadurch gekennzeichnet,** daß Sacknut (32) vorzugsweise eine Schwalbenschwanzform aufweist.

10. Reihenschlußmotor nach einem der vorhergehenden Ansprüche, **dadurch gekennzeichnet,** daß einer der Feldspulen (12) ein Anlaufwiderstand (40) vorgeschaltet ist, dem ein verzögerter Schaltkontakt (38) eines Schalters (20) parallelgeschaltet ist.

11. Reihenschlußmotor nach einem der vorhergehenden Ansprüche, **dadurch gekennzeichnet,** daß einer der Feldspulen (12) eine Diode (42) vorgeschaltet ist, der der verzögerte Schaltkontakt (38) des Schalters (20) parallelgeschaltet ist.

12. Reihenschlußmotor nach Anspruch 11, **dadurch gekennzeichnet,** daß die Stromrichtung der Diode (42) und die Polarität des Permanentmagneten (24) so eingestellt sind, daß das Ankerfeld des Anlaufstroms den Permanentmagneten (24) feldunterstützend beansprucht.

13. Reihenschlußmotor nach Anspruch 1, **dadurch gekennzeichnet,** daß die Schaltanordnung einen dreipoligen Umschalter (46) enthält, wobei wenigstens ein Kontaktsatz (50) des Umschalters (46) einen Wischkontakt (54) aufweist.

14. Reihenschlußmotor nach Anspruch 13, **dadurch gekennzeichnet,** daß die Kontaktsätze (44, 48, 50) so ausgebildet sind, daß sich eine Stellung ergibt, in der die Kontaktsätze (44, 48) keinerlei Kontakt haben, während der Kontaktsatz (50) den Wischkontakt (54) kontaktiert.

15. Reihenschlußmotor nach den Ansprüchen 13 und 14, **dadurch gekennzeichnet,** daß über den Kontaktsatz (50) eine nicht im Bremsstromkreis liegende Feldspule (12') für den Generator- bzw. Bremsbetrieb zu- bzw. abschaltbar angeordnet ist.

16. Reihenschlußmotor nach Anspruch 1, **dadurch gekennzeichnet,** daß das Zeitglied ein Relais (58) enthält, dem ein Abfallverzögerungsglied (66) zugeordnet ist und die Kontaktsätze (60, 62) des Relais (58) nach Umschalten eines Schalters (56) in den Generator- bzw. Bremsbetrieb die Feldspulen (12) zeitversetzt von der Netzspannung trennen.

17. Reihenschlußmotor nach Anspruch 16, **dadurch gekennzeichnet,** daß dem Schalter (56) eine erste Gleichrichterdiode (64) parallelgeschaltet ist und daß dem Relais (58) eine zweite Diode (68) vorgeschaltet ist und parallel zu dem Relais (58) eine Freilaufdiode (70) geschaltet ist.

18. Reihenschlußmotor nach einem der Ansprüche 13 bis 17, **dadurch gekennzeichnet,** daß die Ausschaltverzögerung wenigstens einer Feldspule (12) mindestens 20 msec, vorzugsweise ein ungerades Vielfaches der Dauer einer Halbwelle der Netzspannung beträgt.

## Claims

1. Series-wound motor, in particular universal motor, having a braking device, having a stator, which has a field winding and to whose pole shoe laminate stack, in addition to the field coils (12), further means (24) inducing a magnetic field, preferably at least one permanent magnet, are assigned, having a rotating armature which is fed via a commutator and brushes, and having a switching arrangement which is suitable for changing over to the braking mode, characterized in that the switching arrangement has a switch (20) for changing over to the braking mode, by means of which switch at least one field winding (12) can be changed over, in that this field winding (12) supports with its magnetic excitation the means (24) inducing a magnetic field, and in that the switching arrangement has a timer by means of which it is possible to predetermine an induced voltage for reliable triggering of the braking in the transition time from the motor mode to the braking mode.

2. Series-wound motor according to Claim 1, characterized in that at least one pole (28) of the pole shoe laminate stack (26) has at least one slot.

3. Series-wound motor according to Claim 2, characterized in that the slot runs in the direction of the main field lines excited by the field coil (12), and the permanent magnet (24) is arranged in the slot.

4. Series-wound motor according to Claim 3, characterized in that the slot is designed as a through hole (30), and the permanent magnet (24) is arranged in the hole (30).

5. Series-wound motor according to Claim 3, characterized in that the slot is designed as a continuous slot or blind slot (32) running in the peripheral direction of the pole (28), and the permanent magnet (24) is arranged in the continuous slot or blind slot (32).

6. Series-wound motor according to Claim 5, characterized in that the blind slot (32) is limited in its axial extent to the dimensioning of the permanent magnet (24).

7. Series-wound motor according to one of Claims 3 to 6, characterized in that the permanent magnet (24) is surrounded, except at its poles, against the pole (28) with a non-magnetic layer, preferably air or plastic.

8. Series-wound motor according to one of Claims 3 to 7, characterized in that the permanent magnet (24) is adhesively bonded into the hole (30) or the blind slot (32).

9. Series-wound motor according to one of Claims 5 to 8, characterized in that the blind slot (32) is preferably dovetailed.

10. Series-wound motor according to one of the preceding claims, characterized in that a starting resistor (40), with which a delayed switching contact (38) of a switch (20) is connected in parallel, is connected upstream of one of the field coils (12).

11. Series-wound motor according to one of the preceding claims, characterized in that a diode (42), with which the delayed switching contact (38) of the switch (20) is connected in parallel, is connected upstream of one of the field coils (12).

12. Series-wound motor according to Claim 11, characterized in that the current direction of the diode (42) and the polarity of the permanent magnet (24) are set in such a way that the armature field of the starting current has a field-supporting action on the permanent magnet (24).

13. Series-wound motor according to Claim 1, characterized in that the switching arrangement contains a three-pole changeover switch (46), at least one contact set (50) of the changeover switch (46) having a wiping contact (54).

14. Series-wound motor according to Claim 13, characterized in that the contact sets (44, 48, 50) are designed to result in a position in which the contact sets (44, 48) have no contact at all while the contact set (50) makes contact with the wiping contact (54).

15. Series-wound motor according to Claims 13 and 14, characterized in that a field coil (12'), which does not lie in the braking circuit, is arranged in a manner such that it can be connected and disconnected for the generator mode and braking mode, respectively, via the contact set (50).

16. Series-wound motor according to Claim 1, characterized in that the timer contains a relay (58), to which a drop-out delay element (66) is assigned, and, following the changeover of a switch (56) to the generator or braking mode, the contact sets (60, 62) of the relay (58) disconnect the field coils (12) from the mains voltage in a manner staggered over time.

17. Series-wound motor according to Claim 16, characterized in that a first rectifier diode (64) is connected in parallel with the switch (56), and in that a second diode (68) is connected upstream of the relay (58) and a freewheeling diode (70) is connected in parallel with the relay (58).

18. Series-wound motor according to one of Claims 13 to 17, characterized in that the switching-off delay of at least one field coil (12) is at least 20 msec, preferably an odd multiple of the duration of a half-cycle of the mains voltage.

## Revendications

1. Moteur série, en particulier moteur universel, comprenant un dispositif de freinage, un stator, présentant un enroulement d'excitation, au paquet de tôles de l'épanouissement polaire duquel sont associés, outre les bobines d'excitation (12), d'autres moyens (24) qui induisent un champ magnétique, de préférence au moins un aimant permanent, un induit tournant alimenté au moyen d'un collecteur et de balais, et une disposition de branchement appropriée pour commuter du fonctionnement en moteur au fonctionnement en freinage,
caractérisé en ce que
pour commuter dans le fonctionnement en freinage, la disposition de branchement présente un interrupteur (20) avec lequel on peut commuter au moins un enroulement d'excitation (12),
cet enroulement d'excitation (12) aide par son excitation magnétique les moyens (24) qui induisent un champ magnétique, et
la disposition de branchement présente un organe de temporisation avec lequel on peut prédéfinir une tension d'induction pour avoir un amorçage sûr du freinage dans l'intervalle de temps qui sépare le fonctionnement en moteur du fonctionnement en freinage.

2. Moteur série selon la revendication 1,
caractérisé en ce qu'
au moins un pôle (28) du paquet de tôles de l'épanouissement polaire (26) présente au moins une rainure.

3. Moteur série selon la revendication 2,
caractérisé en ce que
la rainure s'étend en direction des lignes principales de champ produites par la bobine d'excitation (12), et
l'aimant permanent (24) est disposé dans la rainure.

4. Moteur série selon la revendication 3,
caractérisé en ce que
la rainure est constituée sous la forme d'un alésage (30) allant de bout en bout, et
l'aimant permanent (24) est disposé dans l'alésage (30).

5. Moteur série selon la revendication 3,
caractérisé en ce que
la rainure est constituée sous la forme d'une rainure qui va de bout en bout ou d'une rainure borgne (32) s'étendant dans le sens périphérique du pôle (28), et
l'aimant permanent (24) est disposé dans la rainure qui va de bout en bout ou dans la rainure borgne (32).

6. Moteur série selon la revendication 5,
caractérisé en ce que
la rainure borgne (32) est limitée dans son extension axiale à la dimension de l'aimant permanent (24).

7. Moteur série selon l'une des revendications 3 à 6,
caractérisé en ce que
l'aimant permanent (24) est entouré à l'extérieur sur ses pôles, vers le pôle (28), d'une couche amagnétique telle que de préférence de l'air ou une matière plastique.

8. Moteur série selon l'une des revendications 3 à 7,
caractérisé en ce que
l'aimant permanent (24) est collé dans l'alésage (30) ou la rainure borgne (32).

9. Moteur série selon l'une des revendications 5 à 8,
caractérisé en ce que
la rainure borgne (32) présente de préférence une forme de queue d'aronde.

10. Moteur série selon l'une des revendications précédentes,
caractérisé en ce que
l'on monte en avant de l'une des bobines d'excitation (12) une résistance de démarrage (40) en parallèle à laquelle est monté un contact de branchement temporisé (38) d'un interrupteur (20).

11. Moteur série selon l'une des revendications précédentes,
caractérisé en ce que
l'on monte en avant de l'une des bobines d'excitation (12) une diode (42) en parallèle à laquelle est monté le contact temporisé (38) de l'interrupteur (20).

12. Moteur série selon la revendication 11,
caractérisé en ce que
le sens du courant de la diode (42) et la polarité de l'aimant permanent (24) sont réglés d'une façon telle que le champ du courant de démarrage de l'induit épaule le champ de l'aimant permanent (24).

13. Moteur série selon la revendication 1,
caractérisé en ce que
la disposition de branchement contient un commutateur tripolaire (46), au moins un jeu de contacts (50) du commutateur (46) présentant un contact de passage (54).

14. Moteur série selon la revendication 13,
caractérisé en ce que
les jeux de contacts (44, 48, 50) sont constitués d'une façon telle qu'il se produit une position dans laquelle les jeux de contacts (44, 48) n'ont aucun contact d'aucune sorte, tandis que le jeu de contacts (50) vient en contact avec le contact de passage (54).

15. Moteur série selon les revendications 13 et 14,
caractérisé en ce que
l'on peut, au moyen du jeu de contacts (50), disposer une bobine d'excitation (12') ne se trouvant pas dans le circuit du courant de freinage, de façon à pouvoir la brancher ou la débrancher pour obtenir le fonctionnement en générateur ou le fonctionnement de freinage.

16. Moteur série selon la revendication 1,
caractérisé en ce que
l'organe de temporisation contient un relais (58) auquel est associé un organe de temporisation de déclenchement (66), et les jeux de contacts (60, 62) du relais (58), après le basculement d'un commutateur (56) dans le fonctionnement en générateur ou le fonctionnement en freinage, séparent les bobines d'excitation (12) en temps décalé de la tension du réseau.

17. Moteur série selon la revendication 16,
caractérisé en ce que
l'on monte en parallèle au commutateur (56) une première diode de redressement (64), et l'on monte en amont du relais (58) une seconde diode (68) et l'on branche en parallèle au relais (58) une diode à roue libre (70).

18. Moteur série selon l'une des revendications 13 à 17,
caractérisé en ce que
la temporisation de débranchement d'au moins l'une des bobines d'excitation (12) atteint au moins 20 msec, et de préférence un multiple impair de la durée d'une demi-onde de la tension du réseau.
